(19) Europäisches Patentamt
European Patent Office
Office européen des brevets

(11) **EP 2 827 533 A1**

(12) **EUROPEAN PATENT APPLICATION**

(43) Date of publication:
**21.01.2015 Bulletin 2015/04**

(51) Int Cl.:
*H04L 12/24* $^{(2006.01)}$   *G06Q 10/00* $^{(2012.01)}$

(21) Application number: **14176464.7**

(22) Date of filing: **10.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.07.2013 EP 13306018**

(71) Applicant: **Thomson Licensing
92130 Issy-les-Moulineaux (FR)**

(72) Inventors:
• **Le Merrer, Erwan**
  **35576 Cesson-Sévigné (FR)**
• **Le Scouarnec, Nicolas**
  **35576 Cesson-Sévigné (FR)**
• **Tredan, Gilles**
  **31400 Toulouse (FR)**

(74) Representative: **Huchet, Anne
Technicolor
1-5 rue Jeanne d'Arc
92130 Issy-Les-Moulineaux (FR)**

(54) **Method for selecting nodes in a network, corresponding device, computer program and non-transitory computer-readable medium**

(57)   The present disclosure relates to a method for selecting nodes in networks, especially in complex networks with a great number of interconnected nodes and edges, by using a first centrality computation to filter the nodes and deliver a subnetwork with a smaller number of nodes, to which can be applied a second centrality computation.

Figure 1

## Description

### 1. Technical Field

The present disclosure concerns the analysis of complex networks, for example social networks, often used for many Internet services, such as computation of reputation, recommendation, or web indexing.

More precisely, the present disclosure relates to such analysis using metrics computation and to the optimization of such analysis for networks that are more and more complex, in size and in amount of relevant data to analyze.

### 2. Background Art

A widely used metric, called centrality, provides the relative importance of each item within a network, constituted for example by nodes or humans/users and by connections amongst them.

Different centralities exist for different use cases, and for example:

- "pagerank" is used to rank webpages to display to a user on its search engine;
- "betweenness" is used to identify central nodes with regard to their position on paths between items, for example to assess which items are critical for the network robustness;
- "degree" provides the number of connections for an item.

There is a running effort since thirty years for designing fast algorithms concerning important network metrics. Among those metrics, some centrality measures such as Pagerank, betweenness and closeness attracted a lot of attention, mainly because of their capacity to capture the impact of the network structure on numerous problems such as congestion, network resilience, or worm propagation.

As these metrics have a global scope (as opposed to local metrics such as degree), their complexity is often polynomial in the size of the network. Therefore, their computation is often considered as prohibitive for current network sizes.

Indeed, the size of input networks keeps on increasing, reaching billions of nodes and edges.

To circumvent this high complexity, researchers sought solutions to save computation time.

Two different ways have been explored for saving time:

- Distributed computations;
- Approximation algorithms.

Distribution of computations is not always feasible, depending on the centrality metrics.

Regarding the other way for saving time, for example for the betweenness centrality (as the computation time for the betweenness centrality is well known to be unpractical for such network sizes), one known approach for approximating consists in replacing the n invocations of the SSSP (Single Source Shortest Path) algorithm by a sample of k < n invocations. However, in practice, the efficiency of this approach remains limited since relatively high k may be required for results to be accurate, thus not saving sufficient time for complex networks.

Thus, even if some approximation approaches allow reducing time complexity for large networks, the accuracy of the results is not acceptable.

This calls for fast heuristics that allow practical analysis of current networks because running traditional algorithms, as those cited above, would not allow providing results in reasonable/feasible time.

As centrality metrics have proven of a major interest for analyzing the structure of networks, there remains a significant need for fast algorithms for estimating these metrics, given the current network sizes.

### 3. Summary

The aim of the present disclosure is thus that of solving at least some of the drawbacks of the prior art cited above, by a method for selecting nodes in a network, called n-size network, comprising n interconnected nodes.

According to different embodiments of the present disclosure, the method comprises:

- filtering p nodes from the n nodes of the n-size network by executing a first centrality computation by determining the p most connected nodes among the n nodes in the network, thereby obtaining a core network of $p$ nodes, with $p$ smaller than n;
- executing a second centrality on the p nodes of the core network by attributing a centrality metric value to each of the p nodes according their relative number of connections to the other $p$-1 nodes of the core network;
- selecting k nodes from the p nodes of the core network having the k highest centrality metric values. Wherein $n > p > k$.

According to a particular embodiment, the values of p and $k$ are be predetermined, and $n > p > k$. E.g., n = 100,000, p = 100 and k = 10, or p=√n or p=log(n). The $p$ most connected nodes are the $p$ nodes that have the most connections to the other nodes of the network. According to a particular embodiment, the most connected nodes are the nodes that have a number of connections that is superior to a threshold $t$, where $t$ can be determined in different ways, e.g. $t$ is a predetermined number, or $t$ is determined as being the average number of connections of the n nodes. According to yet another embodiment, the p most connected nodes are determined by finding the most connected node, and finding a node that has a number of connections that is equal to or next lesser than the most connected node, then finding a node having a number of connections equal or next lesser than that of the next lesser node, etc, until p nodes are found.

The centrality metric value is for example a value from 1 to 10, from 0 to 1 with a step of 0.01, or 0.245 to 0.678. For example 1 means a lowest relative number of connections, and 10 means a highest number of relative connections.

The highest centrality metric values can be determined in different ways. E.g. The k nodes with the highest centrality metric values are the k nodes that have a centrality metric value that is superior to a threshold y, where y can be determined in different ways, e.g. *y* is the next highest centrality metric value that can be attributed, or *y* is determined as being the average number of metric values attributed to the *p* nodes. According to yet another embodiment, the k nodes are determined from the p nodes by finding a node with the highest attributed centrality metric value, and finding a node that has an attributed centrality metric value that is equal to or next lesser than that of the node with the highest attributed centrality metric value, then finding a node having an attributed centrality metric value that is equal or next lesser than that of the node having the next lower attributed centrality metric value, etc, until k nodes are found.

So, the present disclosure, according to its different embodiments, proposes a new and inventive way to select nodes in networks, especially in complex networks with a great number of interconnected nodes and edges, by using a first centrality computation to filter the nodes and deliver a sub-network (called a core network) with a smaller number of nodes, to which can be applied a second centrality computation. Thanks to the first centrality computation, the size of the core network to which applying the second centrality computation is smaller and the second centrality computation is less expensive in time, with however a very good accuracy due to the fact that the step of filtering uses a first centrality computation for which results are expected to highly correlate with the second centrality.

Indeed, as the most relevant nodes (i.e. nodes having a high influence on the rest of the network) are filtered using the first centrality computation, the core resulting from this filtering comprises a relevant portion of the original complex network and the results of the second centrality computation are almost exact.

After that, the step of selecting the k nodes corresponding to the k highest centrality metric values, also named scores, provides a good accuracy of results while reducing computation costs.

Thus, the present disclosure, according to its different embodiments, proposes a general heuristic for fast computation of top-k centrality metrics, based on the observation that restricting computation solely to the core of networks gives good accuracy in practice, and significantly reduces computation times both theoretically and in practice.

According to one aspect of the disclosure, the number p of nodes in the core network is √n or log(n).

So, according to the different embodiments of the present disclosure, applying the second centrality on a really lower number of nodes is significantly faster than applying the second centrality on the entire network, for almost the same accuracy of the results, because of the choice of the first centrality to filter the core of the network.

Consequently $k < \sqrt{n}$ or $k < \log(n)$, depending on the size of the core network.

According to another aspect of the disclosure, the first centrality computation is done with a precision that is higher than the precision used for the second centrally computation.

So, the present disclosure, according to its different embodiments, allows saving time for the estimation of centrality metrics in a complex network, as a first "cheap" centrality (for example a centrality with cost linear in the network size) is computed on the entire network to filter the core of the network in order to compute the second "expensive" centrality (for example a centrality with polynomial costs) only on the core.

For example, the first and second centralities computations are based on first and second centrality metrics which are correlated such that the first centrality computation provides a core network of p nodes being the most relevant for the second centrality computation.

So, according to this embodiment, the two centralities are correlated, i.e. the cheap centrality can be executed in place of the expensive one in order to filter a sub-network on which the second expensive centrality can be executed. Thus, the expensive centrality is emulated by the cheap centrality to optimize the total time cost of computation while keeping the accuracy of the results of the estimated centralities. The correlation between the two centralities allows filtering a core comprising the most relevant nodes of the network, allowing the second centrality to be executed only on the core without losing a lot of accuracy for the results.

According to another aspect of the disclosure, the first centrality computation is achieved by determining the p most connected nodes among said n nodes in said n-size network, and the second centrality computation is done by attributing a centrality metric value to each of said p nodes according to their relative number of connections to the other *p-1* nodes.

The second centrality computation runs over a network core in which all nodes are given a weight. This weight is attributed in the following way: all core network nodes are first assigned a value set to 1. Then each node from the core network that has a neighbor in the global graph but that is not in the core increments this value by one (+1 for each neighbor). The second centrality computation then takes into account weights; for instance if this centrality computes the "betweenness", nodes that have been weighted with a high value will favor the outcome (in the final result) of nodes they are connected to in the core (as those nodes may also be considered as lying on the shortest path between the nodes excluded from the core).

For example, the first centrality computation computes the degree centrality and the second centrally computation computes the betweenness centrality.

So, according to this embodiment, the degree centrality is applied to the entire network, in order to filter its n nodes and to deliver the most important (also called "top" nodes) $p=\sqrt{n}$ nodes on which can be executed the betweenness centrality. As well known, the degree centrality is a "cheap" centrality in terms of time and complexity of computation, as the betweenness centrality is a more expensive centrality.

So, applying the betweenness centrality on a smaller network allows saving a lot of time while keeping a good accuracy of the results.

Moreover, the degree centrality and the betweenness centrality are correlated in such a way that filtering the entire network using the degree centrality gives a core with nodes that can be considered as the most relevant nodes of the entire network, for the betweenness centrality. Indeed, the results of the computation of the betweenness centrality on the core can be considered enough accurate, and almost accurate as the results of the computation of the betweenness centrality on the entire network.

According to one aspect of the disclosure, the method comprises a weighting step of at least one of the p nodes of said core, taking into account the number of its connected nodes not present in said core.

So, according to this embodiment, the computation of the betweenness centrality is optimized by weighting the nodes of the core with a value taking into account the number of their neighboring (i.e. connected) nodes discarded during the step of filtering, i.e. not in the core, for example called "excluded neighboring nodes". This weighting consists in increasing the number of nodes related to each node of the core. This allows emphasizing important "border" nodes of the core by taking into account, in the betweenness centrality computation, these discarded nodes in the filtering step.

According to different aspects of the disclosure, a node corresponds to an item of the group comprising:

- a device pertaining to said network;
- a user connected to said network;
- a document stored in said network.

For example, the method is used for selecting a device in a plurality of devices interconnected in said network, each of said nodes representing a device, in order to protect said device to defend against propagating worms.

According to other embodiments, the method is used for selecting a document in a set of documents stored in said network, each of said nodes representing a document, in order to recommend said document as item of interest, or the method is used for selecting a user in a plurality of users of said network, each of said nodes representing a user, in order to target said user in priority for efficient marketing campaigns.

Another aspect of the disclosure concerns a device for selecting nodes in a network, called n-size network, comprising n interconnected nodes, the device comprising the following means:

- a filtering module configured to filter p nodes from the n nodes of said n-size network using a computing module configured to compute a first centrality by determining the p most connected nodes among the n nodes in the network, thereby obtaining a core network of $p$ nodes, with $p$ smaller than n;
- a computing module configured to compute a second centrality on the p nodes of the core network by attributing a centrality metric value to each of the p nodes according to their relative number of connections to the other $p-1$ nodes of the core network;
- a selecting module configured to select k nodes from the p nodes of the core network having the k highest centrality metric values, with k smaller than p.

The disclosure further relates to a computer program product downloadable from a communication network and/or recorded on a medium readable by computer and/or executable by a processor, comprising program code instructions for implementing said method for selecting nodes in a network.

The disclosure also relates to a non-transitory computer-readable medium comprising a computer program product recorded thereon and capable of being run by a processor, including program code instructions for implementing said method for selecting nodes in a network.

Although examples of the present disclosure have been described hereinabove in relation with a limited number of embodiments, those skilled in the art, when reading this description, will understand that other embodiments can be imagined without leaving the scope of this present disclosure.

In particular, while not explicitly described, the present embodiments may be employed in any combination or sub-combination.

As will be appreciated by one skilled in the art, aspects of the present principles can be embodied as a device, method or computer readable medium. Accordingly, aspects of the present principles can take the form of an entirely hardware embodiment, an entirely software embodiment (including firmware, resident software, micro-code, and so forth), or an embodiment combining software and hardware aspects than can all generally be referred herein as a "circuit", "module", or "device". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

Moreover, for example, it will be appreciated by those skilled in the art that the block diagrams presented herein represent conceptual views of illustrative system components and/or circuitry embodying the principles of the present disclosure. Similarly, it will be appreciated that any flow charts, flow diagrams, state transition diagrams, pseudo-code, and the like represent various processes which may be substantially represented in computer readable storage media and so executed by a computer or processor, whether or not such computer or processor is explicitly shown.

### 4. Brief Description of Drawings

Other characteristics and advantages of embodiments of the present disclosure shall appear when reading the following description, provided by way of a non-restricted and indicative example (all of the embodiments of the present disclosure are not limited to the characteristics and advantages of the embodiments described hereinafter), and the annexed drawings, wherein:

- Figure 1 shows the main steps of the method according to an embodiment of the present disclosure;
- Figure 2 illustrates the amount of nodes needed to reach a 90th percentile of emulation of the betweenness centrality by the degree centrality, according to an embodiment of the present disclosure;
- Figures 3a and 3b illustrate an example of a simplified structure of a device according to an embodiment of the present disclosure.

### 5. Description of Embodiments

The present disclosure, according to its different embodiments, proposes a near linear heuristic that returns an estimate of the top-$k$ most important nodes in a given network, by selecting these top-$k$ most important nodes in the network.

The inventors have first observed that considerable savings in computation time can be achieved by first filtering the input network based on correlations between cheap and more costly centrality metrics.

Indeed, they observe that such network analyses do not require the exact centrality metric value, also called "score", of each node but aim at identifying the most important/relevant nodes, also called "top nodes". For instance, such top nodes of a social network will be targeted in priority for efficient marketing campaigns, or protected in priority to defend against propagating worms, or recommended to users as items of interest for them, according to different applications.

Thus, the present disclosure, according to its different embodiments, provides a near linear heuristic that does not compute a centrality score for all nodes but instead focuses on identifying the top nodes of the network.

For that, the inventors first study whether the correlations between different centrality metrics allow identifying the most important nodes for an "expensive" centrality by paying only the price of a "cheap" centrality. Then, they use the correlations observed to build a two-pass approach that refines the approximation provided by a cheap centrality using the expensive centrality on a reduced network, called the core. Considering graphs/networks comprising n nodes and m edges, the general principle of the present disclosure is based on finding the k « n most important nodes with respect to a given centrality metric.

The following four most spread centralities have been studied: betweenness, closeness, Pagerank and degree. Degree is the cheapest one, with a cost linear in the graph size, whereas betweenness and closeness are the most expensive ones, with polynomial costs $\theta(nm + n^2 \log n)$. Pagerank has a lower cost $\theta(m \log(1/\varepsilon))$ (with $\varepsilon$ a parameter controlling precision/cost).

In order to test the method of the present disclosure, the following well studied and publicly available graphs have been used: Slashdot, Wiki-vote, Enron, CA-AstroPh (with $n\approx82k$, $7k$, $36k$, $19k$ and $m\approx500k$, $100k$, $367k$, $396k$ respectively) and a Barabasi-Albert graph of $10k$ nodes and on average six edges per node.

The first experiment made by the inventors explores an accuracy/speedup trade-off that can be obtained by emulating a centrality by another one (i.e., executing a cheap centrality in place of an expensive one, and observing the results), with k chosen so that it grows slowly with network input size ($k = \log n$ for example).

Indeed, using degree for emulating betweenness results in high speedups (from 1000 to 10000 times faster) for a reasonable accuracy (i.e., a "recall"of 80%, with recall being defined as the fraction of correctly retrieved nodes, as compared to the exact results by the more expensive centrality).

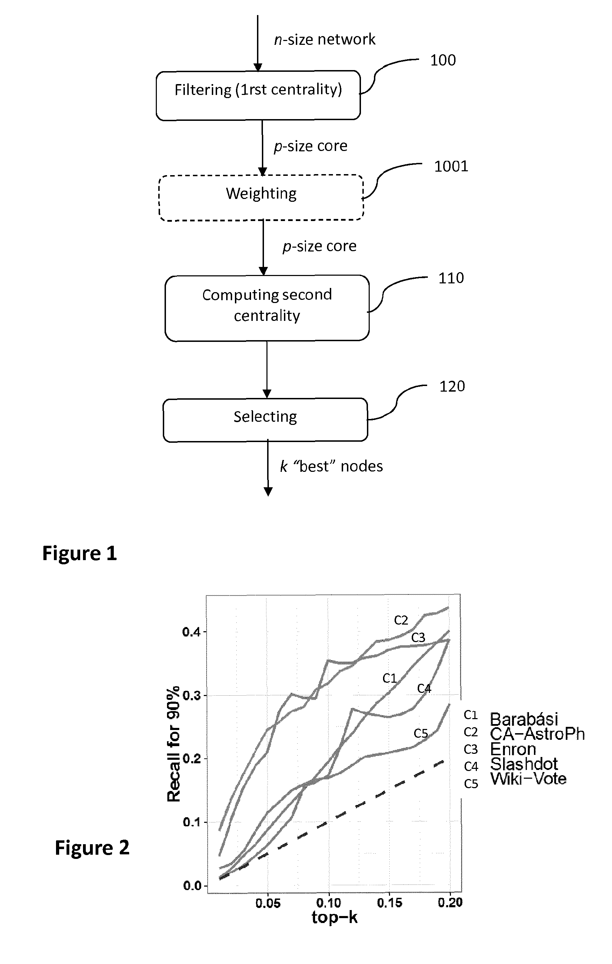

For example, Figure 2 shows the amount of nodes needed to obtain the 90th recall percentile, for the emulation of betweenness by degree. For instance, point (0.2, 0.28) means that for a top-$k$ of size 20% of original network size, the first 28% top nodes according to degree contains 90% of the 20% top nodes according to betweenness. The dash line represents a perfect emulation of a metric by another one (in other words, one centrality could be replaced by another one, providing exactly the same results). The different curves represent the different networks that have been considered. It can be noted that twice the number of nodes is generally required to reach the percentile, with notably three curves with a good fit for *low k* (C1 = Barabasi-Albert, C5 = Wiki-vote and C4 = Slashdot), which motivates the present disclosure. The fact that those emulation results are good for relatively small values of top-k and then degrade, helps to understand why such a study was necessary to propose the present disclosure, and why a total emulation (e.g. with a value of k close to n) of a given centrality by another one does not make sense in practice.

Those observations that one expensive metric may be emulated by another one with good accuracy for top nodes are the base of the present disclosure, according to its different embodiments. Indeed, as for example degree centrality can be computed in near-linear time by partially sorting the nodes according to their degree, while metrics like closeness or betweenness are computed in polynomial time, cheap emulation may be plausible for many complex networks.

The general principle of the present disclosure is thus based on the filtering of the network nodes using a cheap heuristic prior to performing the expensive centrality computation. More specifically, rather than performing the computation over the whole network, the present disclosure is based on performing the computation over a sub-graph, or sub-network, also called the core, containing p candidates nodes, the core being formed of p elite nodes being selected by a cheap centrality that can emulate the expensive centrality (for example $p = \theta(\sqrt{m})$ elite nodes filtered using degree centrality).

Given that $k << p$, the p nodes have a great chance of containing most of the top-$k$ nodes according to the targeted expensive metric. As a consequence, if $p << n$, this is a fast approximation heuristic with a good accuracy.

Thus, the proposed method for selecting nodes in a network, according to an embodiment of the present disclosure, consists of the following steps, as illustrated in Figure 1:

- Step 100 of filtering, using a first centrality computation, the p nodes belonging to the network core

(with $p = \theta(\sqrt{m})$ for example);
- Step 110 of computing a second centrality on the p nodes of the core, delivering a centrality metric value, also called a score, associated to each node of the core;
- Step 120 of selecting k nodes of the core associated with the k highest centrality scores, delivering the k most important (or top) nodes.

According to a particular embodiment, the first centrality computation computes the degree centrality and the second centrality computation computes the betweenness centrality.

Thus, given a graph/network of size n, the step 100 of filtering extracts the p nodes belonging to the core according to the degree centrality, using an efficient partial sorting whose expected complexity is $\theta(n + p \log p)$. Applied for the core extraction of size $p = \sqrt{m}$, this operation then requires $\theta(n + \sqrt{m} \log \sqrt{m})$ time. If the graph is sparse, as most real life complex networks, complexity is $\theta(n)$ (while $\theta(n \log n)$ if the graph is dense).

Then, the step 110 applies the betweenness algorithm over the $p = \sqrt{m}$ nodes of the core, which are connected by $m_c$ edges. The computational complexity is $\theta(p\, m_c + p^2 \log p)$. As each core node is connected on average to a constant fraction of other core nodes (i.e., the core is dense), $m_c$ value is concentrated around $(\sqrt{m})^2$ = m. The 3 resulting complexity is $\theta\left(m^{\frac{3}{2}} + m \log \sqrt{m}\right)$ = $\theta(n\sqrt{n})$ for sparse graphs (i.e., graphs where m = O(n)).

Similarly to the filtering step 100, the step 120 of selecting the top-$k$ nodes presenting the top-$k$ highest scores from the result of the previous step has a complexity of $\theta(p + k \log k)$. This step, as well as step 100, can be realized with any fast sorting algorithm. The result of step 100 is to return the k first values in the result array given by the sorting algorithm.

Given that $k << \sqrt{m}$, the heuristic computation time is dominated by the step 110 of computing the second centrality, for a complexity of $\theta(n\sqrt{n})$ for sparse graphs, which significantly improves the $\theta(n^2)$ bound for classic betweenness on the same sparse input graph.

In the case of the betweenness centrality used for the step 110, an additional optimization (weighting step 1001) can be applied on some or all the p filtered nodes of the core, that consists in adding the number of the "excluded neighboring nodes" (i.e. nodes connected to the considered one discarded at the step 100 of filtering) to the weight of the core nodes. This weighting step 1001 allows emphasizing important "border" nodes by taking into account these excluded neighboring nodes.

Thus, according to a variant of this particular embodiment, the degree centrality is used for the filtering step 100, the optimization described previously is applied to take into account discarded neighboring nodes, and the betweenness centrality is used in the computing step 110.

Over the total of 25 scenario implemented by the inventors, the method of selecting nodes in a network of the present disclosure improves the results given by the degree emulation in most of case (i.e. 19 cases). Those results, consistently comprised from 50 to 75% precision, are produced much faster (from 10 to 104 times faster) than the exact computation.

For example, for a 10000 nodes Barabasi-Albert graph, and for an equivalent accuracy in results (compared to the "baseline" result given by the computation of the exact centrality described in "A faster algorithm for Betweenness Centrality", by Ulrik Brandes, Journal of Mathematical sociology, 2001), the computation times are:

- 6 days, 8 hours with the "baseline";
- 20 minutes with the approximation algorithm described in the document "Centrality estimation in large networks", by Ulrik Brandes and Christian Pich, in the "Journal of bifurcation and chaos", 2007, with $p = \sqrt{n}$;
- 50 seconds with the method of the present disclosure, with degree centrality as the first centrality and betweenness centrality as the second centrality.

Those results thus clearly demonstrate the advantages of the present disclosure, according to its different embodiments, to use such a method for selecting nodes in a network giving a heuristic for a fast estimation of centralities, especially in scenario where exact computation is not required.

According to others embodiments or variants, the filtering step 100 can use a known approximation algorithm described in the document "Centrality estimation in large networks", by Ulrik Brandes and Christian Pich, in the "Journal of bifurcation and chaos", 2007. According to this algorithm, a very small number of nodes $p$ (typically $p = \log n$) can be filtered, in a fast time. Then, the p nodes are sorted according to their resulting betweenness centrality estimation. After that, many steps can be implemented, in order to obtain the p most relevant nodes of the core:

- Step for expanding from the $p1$ top nodes to reach $c^*\sqrt{m}$ nodes, by gathering neighbors of most important nodes ($p1$ ranging from 1 to $c^*\sqrt{m}$);
- Step for performing a random walk from the most relevant nodes, and once a new node is encountered by the random walk, a step for keeping this new node, until reaching $\sqrt{m}$ nodes (with no duplicate nodes).

Moreover, according to others embodiments or variants, the computing step 110 can also use the approximation algorithm described above, to further decrease the computational time, or the computing step 110 can compute other centralities (Pagerank, Degree ...), that should have been identified as relevant for the core filtered, with respect to the desired global objective. It is also possible to reuse the computation of the filtering step 100 to optimize the computation of the computation step 110.

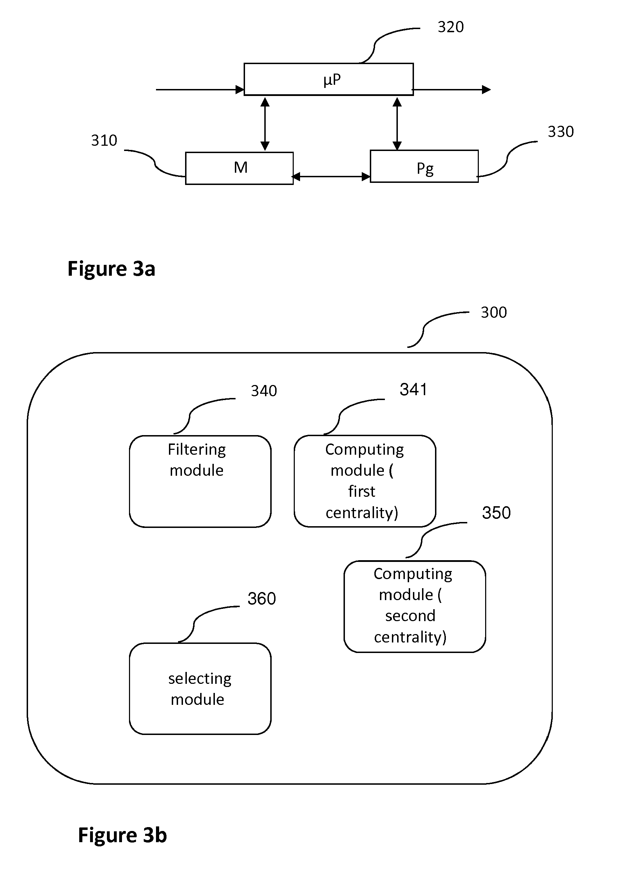

Finally, figures 3a and 3b present a simplified structure of a device 300 for selecting nodes in a network, according to a particular embodiment of the present disclosure.

A device of this kind comprises a memory 310 comprising a buffer memory M, a processing unit 320 equipped for example with a microprocessor $\mu P$ and driven by the computer program 330 implementing the method for selecting nodes in a network according to the present disclosure.

At initialization, the code instructions of the computer program 330 are for example loaded into a RAM and then executed by the processor of the processing unit 320.

According to the present disclosure, the microprocessor of the processing unit 320 implements the steps of the method for selecting nodes in a network described here above according to the instructions of the computer program 330. To this end, the device comprises the following modules, illustrated by figure 3b:

- a filtering module 340 configured to filter the n nodes of the n-size network using a computing module 341 configured to compute a first centrality, thereby obtaining a core network of $p$ nodes, with $p$ smaller than n;
- a computing module 350 configured to compute a second centrality on the p nodes of the core, delivering a centrality metric value associated to each node of the core;
- a selecting module 360 configured to select k nodes of the core associated with the k highest centrality metric values.

**Claims**

1. A method for selecting nodes in a network, comprising n interconnected nodes, said method being **characterized in that** it comprises:

   filtering (100) p nodes from the *n* nodes of said network by executing a first centrality computation by determining the *p* most connected nodes among the n nodes in the network, thereby obtaining a core network of *p* nodes, with *p* smaller than n;
   executing a second centrality (110) computation on the *p* nodes of said core network by attributing a centrality metric value to each of said *p* nodes according to their relative number of connections to the other *p-1* nodes of said core network;
   selecting (120) *k* nodes from said p nodes of said core network having the k highest centrality metric values, with k smaller than p.

**2.** The method for selecting nodes in a network according to claim 1, wherein $p=\sqrt{n}$.

**3.** The method for selecting nodes in a network according to claim 1, wherein p=log(n).

**4.** The method for selecting nodes in a network according to any of claims 1 to 3, wherein the first centrality computation computes the degree centrality and the second centrally computation computes the betweenness centrality.

**5.** The method for selecting nodes in a network according to any of claims 1 to 4, further comprising weighting of at least one of the p nodes of said core network, taking into account the number of its connected nodes not present in said core network.

**6.** The method for selecting nodes in a network according to any of claims 1 to 8, wherein a node corresponds to a device pertaining to said network.

**7.** The method for selecting nodes in a network according to any of claims 1 to 6, wherein said method is used for selecting a device in a plurality of devices interconnected in said network, each of said nodes representing a device.

**8.** A device (300) for selecting nodes in a network comprising n interconnected nodes, said device comprising the following means:

a filtering module (340) configured to filter p nodes from the n nodes of network using a computing module (341) configured to compute a first centrality by determining the p most connected nodes among the n nodes in the network, thereby obtaining a core network of $p$ nodes, with $p$ smaller than n;
a computing module (350) configured to compute a second centrality on the p nodes of said core network by attributing a centrality metric value to each of said p nodes according to their relative number of connections to the other $p-1$ nodes of said core network;
a selecting module (360) configured to select k nodes from said p nodes of said core network having the k highest centrality metric values, with k smaller than p.

**9.** A computer program product downloadable from a communication network and/or recorded on a medium readable by computer and/or executable by a processor, comprising program code instructions for implementing the steps of the method for selecting nodes in a network according to any of claims 1 to 7.

**10.** A non-transitory computer-readable medium comprising a computer program product recorded thereon and capable of being run by a processor, including program code instructions for implementing the steps of the method for selecting nodes in a network according to any of claims 1 to 7.

**Figure 1**

**Figure 2**

320

μP

310

M

330

Pg

**Figure 3a**

300

340

Filtering
module

341

Computing
module (
first
centrality)

350

Computing
module (
second
centrality)

360

selecting
module

**Figure 3b**

Europäisches
Patentamt

European
Patent Office

Office européen
des brevets

**EUROPEAN SEARCH REPORT**

Application Number

EP 14 17 6464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 990 973 A2 (DEUTSCHE TELEKOM AG [DE]) 12 November 2008 (2008-11-12) * paragraphs [0003], [0009], [0011] - [0014], [0021] - [0024], [0033] - [0044], [0062] - [0065]; claims * ----- | 1-10 | INV. H04L12/24 G06Q10/00 |
| X | WO 2009/096793 A1 (TELENOR ASA [NO]; CANRIGHT GEOFFREY [NO]; ENGO-MONSEN KENTH [NO]) 6 August 2009 (2009-08-06) * page 1, line 1 - page 2, line 17 * * page 3, line 19 - line 30 * * page 4, line 1 - page 5, line 5 * * page 10, line 26 - line 31 * * page 12, line 13 - page 14, line 5 * * page 16, line 3 - line 16; claims * ----- | 1-10 | |
| X | US 2013/163471 A1 (INDUKURI KISHORE VARMA [IN] ET AL) 27 June 2013 (2013-06-27) * paragraphs [0005], [0032] - [0047]; claims * ----- | 1-10 | |
| Y | US 2010/014657 A1 (KERSCHBAUM FLORIAN [DE] ET AL) 21 January 2010 (2010-01-21) * paragraphs [0002], [0030] - [0035] * ----- | 1-10 | TECHNICAL FIELDS SEARCHED (IPC) H04L G06Q |
| Y | DAIJUN WEI ET AL: "Degree centrality based on the weighted network", CONTROL AND DECISION CONFERENCE (CCDC), 2012 24TH CHINESE, IEEE, 23 May 2012 (2012-05-23), pages 3976-3979, XP032204248, DOI: 10.1109/CCDC.2012.6244633 ISBN: 978-1-4577-2073-4 * paragraphs [0002], [0003] * ----- -/-- | 1-10 | |

The present search report has been drawn up for all claims

| Place of search | Date of completion of the search | Examiner |
|---|---|---|
| Munich | 14 November 2014 | Ceccarini, Giulio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 14 17 6464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Erwan Le Merrer ET AL: "Think distributed: a glimpse of decentralized algorithmic *", , 22 November 2011 (2011-11-22), XP055090118, Retrieved from the Internet: URL:https://www.net.t-labs.tu-berlin.de/~gilles/pdf/glimpse_distributed.pdf [retrieved on 2013-11-26] * paragraphs [0004], [0005] * ----- | 1-10 | |
| A | ANNE-MARIE KERMARREC ET AL: "Second order centrality: Distributed assessment of nodes criticity in complex networks", COMPUTER COMMUNICATIONS, vol. 34, no. 5, 15 April 2011 (2011-04-15) , pages 619-628, XP028140361, ISSN: 0140-3664, DOI: 10.1016/J.COMCOM.2010.06.007 [retrieved on 2010-06-12] * paragraphs [0004], [0005] * ----- | 1-10 | TECHNICAL FIELDS SEARCHED (IPC) |

The present search report has been drawn up for all claims

| Place of search | Date of completion of the search | Examiner |
|---|---|---|
| Munich | 14 November 2014 | Ceccarini, Giulio |

EPO FORM 1503 03.82 (P04C01)

## ANNEX TO THE EUROPEAN SEARCH REPORT
## ON EUROPEAN PATENT APPLICATION NO.

EP 14 17 6464

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2014

| Patent document cited in search report | | | Publication date | Patent family member(s) | | | Publication date |
|---|---|---|---|---|---|---|---|
| EP | 1990973 | A2 | 12-11-2008 | NONE | | | |
| WO | 2009096793 | A1 | 06-08-2009 | DK | 2250763 | T3 | 26-09-2011 |
| | | | | EP | 2250763 | A2 | 17-11-2010 |
| | | | | WO | 2009096793 | A1 | 06-08-2009 |
| | | | | WO | 2009096799 | A2 | 06-08-2009 |
| US | 2013163471 | A1 | 27-06-2013 | NONE | | | |
| US | 2010014657 | A1 | 21-01-2010 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ULRIK BRANDES.** A faster algorithm for Betweenness Centrality. *Journal of Mathematical sociology,* 2001

- **ULRIK BRANDES ; CHRISTIAN PICH.** Centrality estimation in large networks. *Journal of bifurcation and chaos,* 2007